# EUROPEAN PATENT APPLICATION

(11) **EP 3 147 181 A1**
(43) Date of publication of application: **29.03.2017**
(21) Application number: 15796665.6
(22) Date of filing: 13.05.2015
(51) Int. Cl.: B62D 15/02, B60R 16/02, B62D 3/12, B62D 7/15, F16H 19/04

(54) **VEHICLE**

(30) Priority: 22.05.2014 JP 2014106094
(71) Applicant: NTN Corporation, Osaka-shi, Osaka 550-0003 (JP)
(72) Inventor: SUZUKI, Yosuke, Iwata-shi Shizuoka 438-0037 (JP); INOKUCHI, Kazuyuki, Iwata-shi Shizuoka 438-0037 (JP)
(74) Representative: Grünecker Patent- und Rechtsanwälte PartG mbB
(86) International application number: PCT/JP2015/063759
(87) International publication number: WO 2015/178269

(57) **Abstract**

A vehicle includes steering devices (10 and 20) configured to change a travel state of the vehicle between a normal travel mode and a special travel mode by steering right and left wheels (w) in right and left opposite directions; a display device (80); and a processing means (83) configured to calculate an angle difference between the angle of each of the right and left wheels (w) in either one of the normal travel mode and the special travel mode, and the current angle of each of the right and left wheels (w), which have been steered by the steering devices (10 and 20). The processing means (83) is further configured to display, on the display device (80), information necessary for a driver to steer the right and left wheels (w) based on the angle difference.

## Description

### TECHNICAL FIELD

This invention relates to a vehicle equipped with a display device for notify the driver of information on the steering conditions of the wheels.

### BACKGROUND ART

A steering mechanism known as an Ackerman-Jeantaud steering mechanism includes a steering link mechanism connecting together right and left vehicle wheels (an assembly including a tire, a rim, a hub, an in-wheel motor, etc. is hereinafter referred to as a "vehicle wheel" or simply a "wheel"), and used to steer the vehicle wheels. This steering mechanism includes tie rods and knuckle arms such that while the vehicle is turning, the right and left wheels move around the same center point.

One of such steering mechanisms is disclosed in the below-identified Patent document 1. The vehicle of Patent document 1 includes at least one such steering mechanism, which includes tie rods and knuckle arms, for either the front right and front left wheels or the rear right and rear left wheels. The steering mechanism includes an actuator capable of changing either the distance between the right and left tie rods, or the angles between the respective wheels and the knuckle arms, thereby allowing smooth normal travel mode, parallel movement mode, and small-radius turning mode.

The below-identified Patent document 2 discloses steering mechanisms each including a steering shaft disposed between the front right and front left wheels or between the rear right and rear left wheels, and comprising two right and left split steering shaft members, and a normal-reverse switching means disposed between the split steering shaft members and capable of switching the rotational direction of the split steering members between the normal rotation and the reverse rotation. The switching means thus allows, for example, lateral movement of the vehicle by steering the wheels by 90 degrees.

The below-identified Patent document 3 discloses a four-wheel steering vehicle which is configured such that the rear wheels are steered by an actuator corresponding to the steering of the front wheels. The below-identified Patent document 4 discloses a steering mechanism including a rack housing connecting the right and left wheels and movable in the fore-and-aft direction, to make toe adjustments of the right and left wheels, thereby increasing the travel stability of the vehicle.

The below-identified Patent document 5 discloses a steering mechanism including two rack bars movable in the right-and-left direction independently of each other, and connected to the respective right and left wheels via tie rods. The rack bars can be moved in opposite directions to each other by synchronizing gears retained in a synchronizing gear box, relative to the synchronizing gear box. The steering mechanism further includes pinion gears in mesh with the respective rack bars, and a coupling mechanism provided between the pinion gears and capable of coupling and uncoupling the rotary shafts of the pinion gears. When the pinion gears are coupled together by the coupling mechanism, the rack bars are moved in the same direction by the same distance, together with each other, so that the right and left wheels are steered in the same direction. When the pinion gears are uncoupled from each other by the coupling mechanism, the rack bars are moved in opposite directions to each other by the same distance, so that the right and left wheels are steered in opposite directions to each other. Thus, the travel state of the vehicle can be freely changeable between a normal travel mode and one of special travel modes including a pivot turn mode).

### PRIOR ART DOCUMENTS

### PATENT DOCUMENTS

Patent document 1: JP Patent Publication 04-262971A
Patent document 2: JP Patent 4635754
Patent document 3: JP Utility Model Registration 2600374
Patent document 4: JP Patent Publication 2003-127876A
Patent document 5: JP Patent Application 2013-158876 (not published)

### SUMMARY OF THE INVENTION

### OBJECT OF THE INVENTION

An ordinary Ackerman-Jeantaud steering mechanism allows smooth normal travel because, during normal traveling, the lines perpendicular, in plan view, to the lines of rotation of the respective wheels (widthwise center lines of the wheels) converge on the center of turning of the vehicle. However, even if it is desired to move the vehicle laterally (parallel movement in the lateral direction with respect to the fore-and-aft direction of the vehicle), it is difficult to steer the wheels in the direction perpendicular to the fore-and-aft direction of the vehicle due to the lengths of the steering links and interference with other members. Also, even if one of the right and left wheels is steered by 90 degrees, the one and the other of the right and left wheels never become completely parallel to each other, thus making smooth travel difficult.

Ordinarily, this type of vehicle is configured such that the front wheels as steerable wheels can be steered in a direction in which the vehicle is to be moved, and the rear wheels, which are non-steerable, are kept parallel the fore-and-aft direction of the vehicle. Thus, when the front wheels are steered while the vehicle is moving, the turning circles of the front wheels do not coincide with those of the rear wheels. In particular, while the vehicle is traveling at a low speed, the vehicle turns with the turning circles of the rear wheels located inside of the respective turning circles of the front wheels, and while the vehicle is traveling at a high speed, the vehicle turns with the turning circles of the front wheels located inside of the respective turning circles of the rear wheels due to centrifugal force. This causes the orientation of the vehicle not to coincide with the turning direction of the vehicle. This problem is avoided in a vehicle including a four-wheel steering (4WS) mechanism (four-wheel steering device) which allows steering of both the front and rear wheels, thereby ensuring smooth travel of the vehicle.

Patent document 1 discloses a 4WS vehicle which can be moved laterally and can make a pivot turn. However, since this vehicle needs a large number of actuators to change the lengths of the tie rods, the distance between the tie rods, and the angles between the wheels and the corresponding knuckle arms, control is complicated. The device disclosed in Patent document 2 is not only complicated in structure, but needs a large number of gears in order to steer heels by rotating the rack bars. Thus, plays are created between parts, which make smooth steering of the wheels difficult.

Patent document 3 discloses a conventional four-wheel steering mechanism which allows steering of rear wheels. However, it is difficult to move the vehicle in the lateral direction with this mechanism alone, for the above-described reasons. Patent document 4 discloses a steering mechanism which allows toe adjustment but is unable to perform lateral movement and small-radius turning of the vehicle.

Patent document 5 is a patent application filed by the applicant in an attempt to solve the above-mentioned problems of Patent documents 1-4, and discloses a vehicle configured such that the driving state can be switched between the normal travel mode and a special travel mode when the driver operates the steering wheel. This arrangement has a problem in that the driver can never exactly know to which extent the steering wheel should be operated to complete the change of travel modes, and that if the operation of the steering wheel is stopped before the change of travel modes has not been completed, it is impossible to complete the change of travel modes.

An object of the present invention is to provide a vehicle in which travel modes can be changed when a driver operates the steering wheel, and which is capable of continuously informing the driver of the current state of the change of travel modes, thereby allowing the driver to reliably complete the change of travel modes.

### MEANS FOR ACHIEVING THE OBJECT

In order to achieve this object, the present invention provides a vehicle capable of traveling in a normal travel mode and a special travel mode, and comprising:
steering devices configured to change a travel state of the vehicle between the normal travel mode and the special travel mode by steering right and left wheels in right and left opposite directions;
a display device; and
a processing means configured to calculate an angle difference between an angle of each of the right and left wheels in either one of the normal travel mode and the special travel mode, and a current angle of each of the right and left wheels, which have been steered by the steering devices (10 and 20),
the processing means being further configured to display, on the display device, information necessary for a driver to steer the right and left wheels based on the angle difference.

With this arrangement, the driver can operate the steering wheel by an optimum amount based on the information displayed on the display device. This avoids the situation in which due to excessive or insufficient operation of the steering wheel, a change of travel modes cannot be completed reliably.

The information displayed on the display device may include a figure which is indicative of a direction in which the steering wheel is to be turned by the driver.

The information displayed on the device may include the above-mentioned angle difference.

The processing means may be configured to display, on the display device, directions of the right and left wheels in the form of figures when the travel state has been changed to an intended travel mode.

The processing means may be further configured, if abnormality occurs in one of the steering devices while the travel state is being changed, to display the abnormality on the display device.

The processing means may be further configured to generate warning sounds to the surrounding environment of the vehicle while the travel state is being changed.

Each steering device may include;
tie rods connected to, and configured to steer, the front right and front left wheels, or the rear right and rear left wheels, respectively;
a pair of rack bars connected to the respective tie rods;
a synchronizing gear in mesh with the rack bars and configured to convert a movement of one rack bar of the pair of rack bars in either one of right and left opposite directions along which rack teeth of the rack bars are arranged to a movement of the other rack bar of the pair of rack bars in the other of the right and left opposite directions;
a rack bar moving means capable of moving the pair of rack bars in the respective right and left opposite directions; and
a moving amount sensing means configured to sense moving amounts of the respective rack bars in the right and/or left opposite direction.

The rack bar moving means may include;
a first pinion gear mounted, directly or indirectly through another member, to a steering shaft, and in mesh with the one rack bar;
a second pinion gear coaxial with the first pinion gear, and in mesh with the other rack bar;
a coupling mechanism disposed between the first pinion gear and the second pinion gear, and configured to selectively couple together the first pinion gear and the second pinion gear and uncouple the first pinion gear and the second pinion gear from each other; and
a coupling state sensing means;
wherein the coupling mechanism includes:
a fixed part provided on one of the first pinion gear and the second pinion gear; and
a moving part provided on the other of the first pinion gear and the second pinion gear, and configured to be fitted to the fixed part by axially moving, relative to the fixed part, while being kept coaxial with the fixed part, and
wherein the coupling state sensing means includes:
a sensed portion provided on an outer periphery of the moving part; and
a sensor portion arranged such that when the fixed part and the moving part are coupled together and uncoupled from each other, the sensor portion is opposed to the detected portion, and configured to generate a sensor signal when the sensor portion is close to the sensed portion.

### ADVANTAGES OF THE INVENTION

The vehicle according to the present invention includes steering devices for changing the travel state between the normal travel mode and a special travel mode by steering the right and left wheels in right and left opposite directions when the steering wheel is operated, and further includes a display device and a processing means configured to display, on the display device, information necessary for the driver to steer the wheels, based on the angle difference between the angle of the right and left wheels w during the normal travel mode or a special travel mode, and the current angle of the right and left wheels, which have been steered by the steering devices. This arrangement allows the driver to steer the steering wheel by a right amount based on the information on the display device, thus reliably preventing the failure to change travel modes due to insufficient or excessive operation of the steering wheel.

### BRIEF DESCRIPTION OF THE DRAWINGS

Figs. 1(a) and 1(b) are plan views of a non-steer-by-wire type vehicle and a steer-by-wire type vehicle, both according to the present invention.
Fig. 2 is a plan view of the vehicle shown in Fig. 1(a), showing a normal travel mode (normal steering mode).
Fig. 3 is a plan view of the vehicle shown in Fig. 1(a), showing a pivot turn mode.
Fig. 4 is a plan view of the vehicle shown in Fig. 1(a), showing a lateral movement mode (parallel movement mode).
Figs. 5(a) and 5(b) are a back view and a plan view of a steering device used in the vehicle shown in Fig. 1(a), showing its interior.
Figs. 6(a) and 6(b) are back views of a coupling mechanism used in the steering device shown in Fig. 5, showing its coupled state (Fig. 6(a)) and its uncoupled state (Fig. 6(b)).
Fig. 7 shows a control flow for changing travel modes.
Fig. 8 shows a flow of abnormality determination when switching ravel modes.
Fig. 9 shows an error indication on a display device.
Fig. 10 shows an indication, on the display device, of the direction in which the steering wheel is to be turned, and the current travel mode.
Fig. 11(a)-11(c) show the current travel modes, which are, respectively, a normal travel mode, a pivot turn mode, and a lateral movement mode.

### BEST MODE FOR EMBODYING THE INVENTION

The vehicle embodying the present invention is described with reference to the drawings. In particular, description is first made of the steering mechanism of the vehicle and various travel modes, and then information displayed on a display device when switching travel modes.

### Regarding the steering mechanism of the vehicle and travel modes

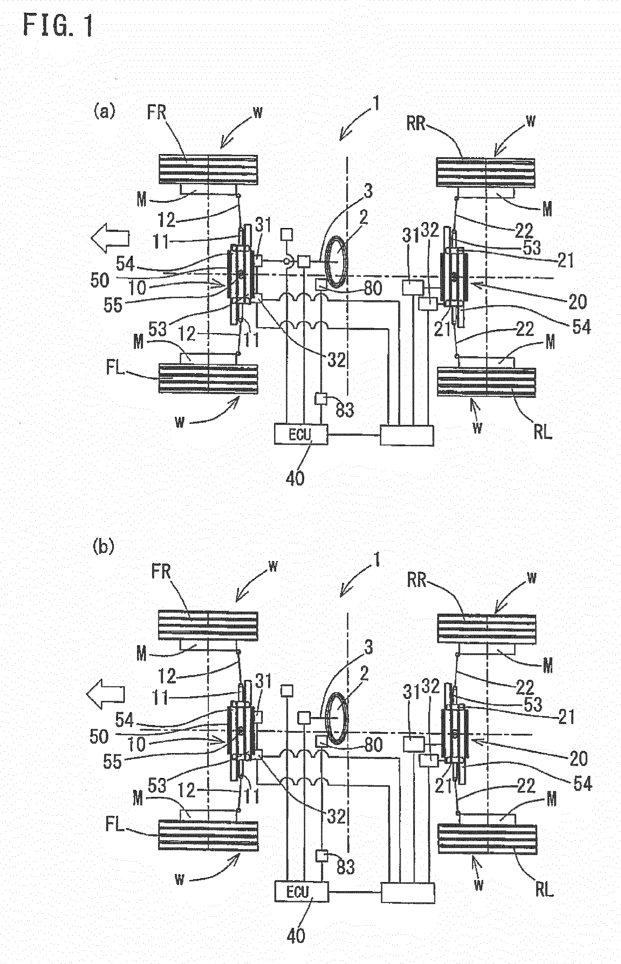

Figs. 1(a) and 1(b) show the drive train and the control path of the vehicle 1. The vehicle 1 includes front left and front right wheels FL and FR which are coupled to a front steering device 10 through respective tie rods 12, and rear left and rear right wheels RL and RR coupled to a rear steering device 20 through respective tie rods 22.

Each steering device 10 (20) includes two rack bars for steering the right and left wheels w. Of the two rack bars, the rack bar coupled to the wheel on the left of the vehicle with respect to the forward direction of the vehicle is hereinafter referred to as the "first rack bar 53", while the rack bar on the right of the vehicle is referred to as the "second rack bar 54". The forward direction of the vehicle is indicated by the arrow on the left of each of Figs. 1(a), 1(b) and 2-4.

The rack bars 53 and 54 of each steering device 10 (20) have connecting members 11 and 21 connected to the right and left pair of front (rear) wheels w through the respective tie rods 12 (22). Members such as knuckle arms are disposed between the tie rods 12 and 22 and the respective wheels w.

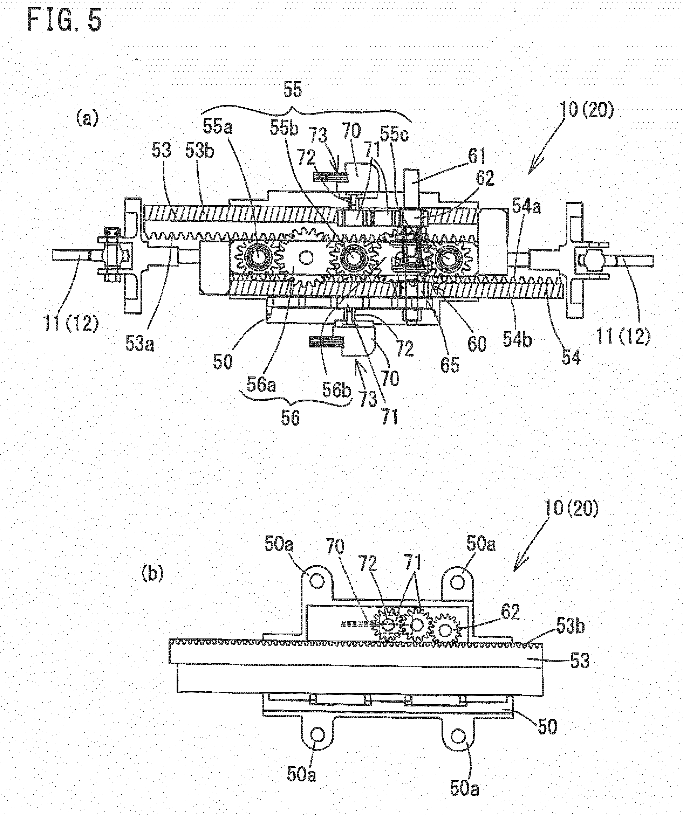

As shown in Figs. 5(a) and 5(b), the first rack bar 53 and the second rack bar 54 of each steering device 10 (20) are received in a rack case (steering cylinder) 50 which extends in the right-and-left direction with respect to the direction in which the vehicle moves in a straight line (i.e., fore-and-aft direction of the vehicle). The rack case 50 is fixedly screwed, directly or indirectly through a flange 50a, to the frame (chassis), not shown, of the vehicle 1.

The steering device 10 (20) includes two magnetic sensors 70 configured to sense the movements of the rack bars 53 and 54 so that it is possible to determine whether the right and left wheels w are being properly steered. The steering devices 10 and 20 each include a first rotary shaft 61 (pinion shaft). The first rotary shaft 61 of the steering device 10 is connected to a steering shat 3 through a steering joint, not shown.

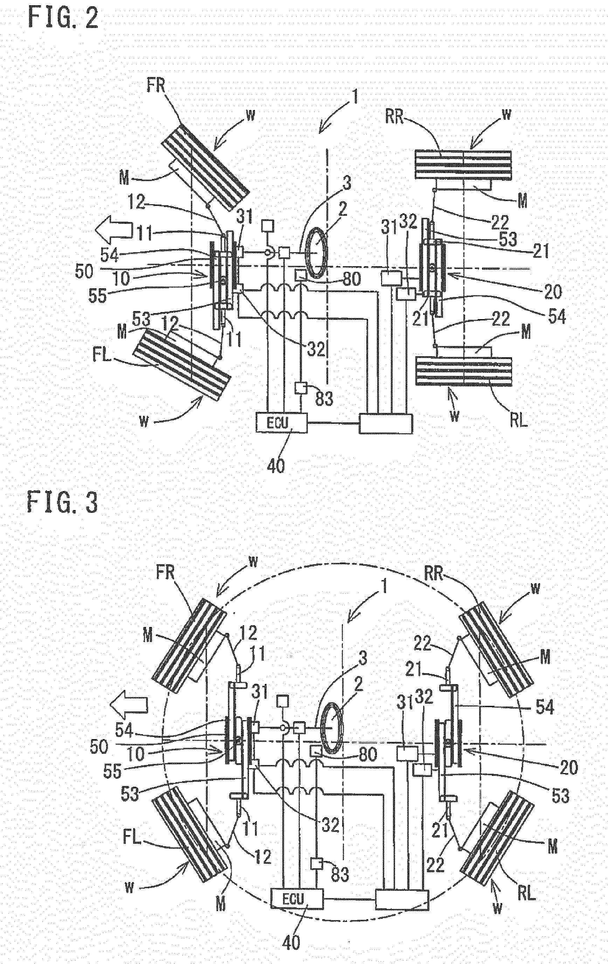

The first rack bar 53 and the second rack bar 54 of each steering device 10 (20) can be moved together with each other to the right or left by the same distance, either directly by the operation of the steering wheel 2 by the driver, or by the actuation of a normal steering actuator 31 which is operatively associated with the operation of the steering wheel 2. Due to this movement, the right and left wheels w are simultaneously steered to the right or left during a normal travel mode (see Fig. 2).

As shown in Fig. 5(a), the steering device 10 (20) includes a rack bar moving means 60 which is capable of moving the first rack bar 53 and the second rack bar 54 in the opposite directions to each other along the right-and-left direction with respect to the direction in which the vehicle 1 moves in a straight line, namely, along the direction in which the rack bars moves relative to each other (i.e., the direction in which the teeth of the rack bars are arranged). The rack bar moving means 60 includes first synchronizing gears 55 which each mesh with a synchronizing rack gear 53a of the first rack bar 53 and a synchronizing rack gear 54a of the second rack bar 54, which is opposed to the synchronizing rack gear 53a of the first rack bar 53.

The first synchronizing gears 55 comprise three gears 55a, 55b and 55c which are arranged at regular intervals in the direction in which the teeth of each rack gear 53a (54a) are arranged. When the first rack bar 53 moves in either one direction along the direction in which the teeth of the synchronizing rack gear 53a are arranged under a driving force applied to the first rack bar 53 from the rack bar moving means 60, this movement is converted to the movement of the second rack bar 54 in the other direction by the distance equal the distance by which the first rack bar 53 moves in the one direction.

Gears 56a and 56b which constitute second synchronizing gears 56 are disposed, respectively, between the first synchronizing gears 55a and 55b, which are adjacent to each other, and between the first synchronizing gears 55b and 55c, which are adjacent to each other. The second synchronizing gears 56 are in mesh with neither of the synchronizing rack gear 53a of the first rack bar 53 and the synchronizing rack gear 54a of the second rack bar 54, and in mesh with only the first synchronizing gears 55, to allow the three first synchronizing gears 55a, 55b and 55c to be rotated in the same direction by the same angle. The second synchronizing gears 56 thus allow smooth relative movement between the first rack bar 53 and the second rack bar 54. The first rack bar 53 and the second rack bar 54 each include, besides the synchronizing rack gear 53a (54a), a steering rack gear 53b (54b).

As shown in Fig. 5(a), each steering device 10 (20) includes two moving amount sensing means 73 for sensing, respectively, the moving amounts of the rack bars 53 and 54 to the right and left. Each moving amount sensing means 73 includes moving amount sensing gears 71 one of which is in mesh with one of first and second pinion gears 62 and 65, a pulse gear 72 provided on one of the moving amount sensing gears 71 so as to rotate as the moving amount sensing gears 71 rotate, and one of the two magnetic sensors 70 opposed to the pulse gear 72. The magnetic sensor 70 includes a sensing element or a sensing coil for converting a change in magnetic field to an electric signal, and allows measurement of the amount of rotation of the pulse gear 72.

When the rack bars 53 and 54 of each steering device 10 (20) are moved to the right and/or left, and the first and second pinion gears 62 and 65 rotate correspondingly, the moving amount sensing gears 71 also rotate correspondingly, thus causing the pulse gears 72 to also rotate correspondingly. The rotation of the pulse gears 72 causes the magnetic sensors 70 to generate electric signals based on which a processing means of the steering device 10 (20) can calculate the numbers of revolutions of the respective pulse gears 72, and thus the steering angles of the right and left wheels w.

The pulse gears 72 used in this embodiment may be replaced with rotary magnetic encoders. Since the pulse gears 72, the rotary magnetic encoders, and the magnetic sensors 70 are less likely to be affected by dust and dirt, the moving amount sensing means 73, mounted on the vehicle 1, is capable of maintaining high sensing accuracy. However, if protective measures against dust and dirt are taken, optical rotation sensor arrangements may be used instead.

A display device 80 configured to display, thus notifying the driver of, information on e.g., steering directions are provided in the vicinity of the steering wheel 2. The information to be displayed on the display device 80 is described later.

Next, the operation of the rack bar moving means 60 of each steering device 10 (20) is described.

The rack bar moving means 60 includes a second rotary shaft 64 arranged coaxially with the first rotary shaft 61, and a second pinion gear 65 mounted to the second rotary shaft 64 so as to be rotatable in unison with the second rotary shaft 64. As shown in Fig. 5(a), the first pinion gear 62 meshes with the steering rack gear 53b of the first rack bar 53, while the second pinion gear 65 meshes with the steering rack gear 54b of the second rack bar 54.

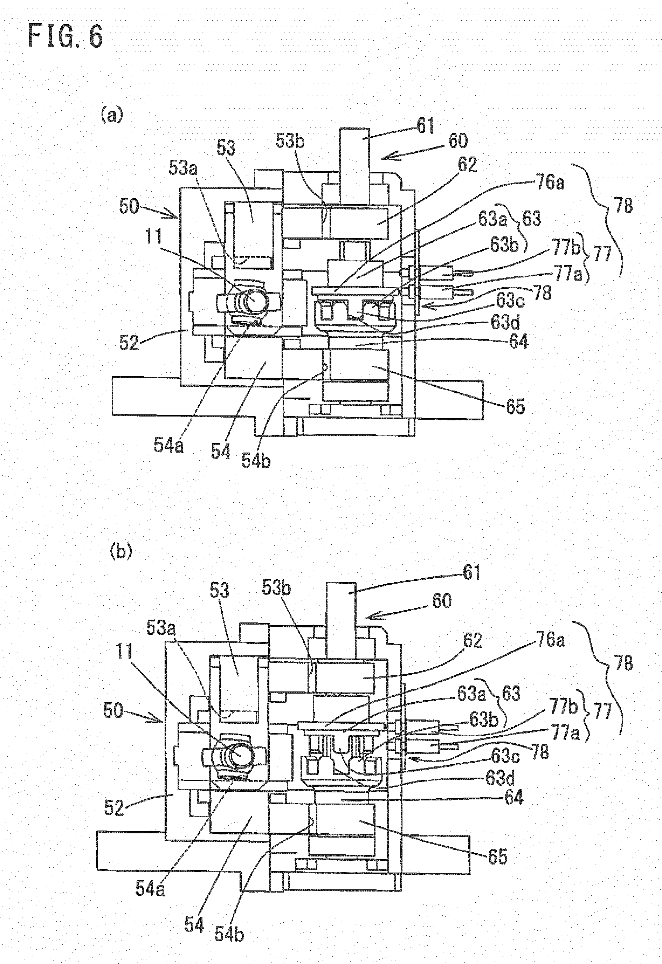

A coupling mechanism 63 is mounted between the first pinion gear 62 and the second pinion gear 65, and is capable of selectively coupling together the first rotary shaft 61 and the second rotary shaft 64 so as to be not rotatable relative to each other (coupled state, shown in Fig. 6(a)), and uncoupling the first rotary shaft 61 and the second rotary shaft 64 from each other so as to be rotatable relative to each other (uncoupled state, shown in Fig. 6(b)).

As shown in Figs. 6(a) and 6(b), the coupling mechanism 63 includes a moving part 63a provided on the side of the first rotary shaft 61, and a fixed part 63b provided on the side of the second rotary shaft 64. The moving part 63a is biased toward the fixed part 63b by an elastic member, not shown, such as a spring. When the moving part 63a is pushed toward the fixed part 63b by the elastic member until protrusions 63c of the moving part 63a are engaged in recesses 63d of the fixed part 63b, the first and second rotary shafts 61 and 64 are coupled together so as not to be rotatable relative to each other. The protrusions 63c may be formed, not on the moving part 63a, but on the fixed part 63b, with the recesses 63d formed in the moving part 63a.

The moving part 63a of the coupling mechanism 63 can be moved axially upward (in Fig. 6(a)) and away from the fixed part 63b with a force from an external driving source, not shown, such as a push solenoid, until the fixed part 63b is uncoupled from the moving part 63a, and thus first rotary shaft 61 and the second rotary shaft 64 become rotatable independently of each other. In this state, the first pinion gear 62 and the second pinion gear 65 are also rotatable independently of each other.

The first pinion gear 62 and the second pinion gear 65 are in mesh with the first rack bar 53 and the second rack bar 54, respectively, and the first rack bar 53 and the second rack bar 54 are both in mesh with the first synchronizing gears 55. Thus, when the first pinion gear 62 is rotated while, as shown in Fig. 6(b), being uncoupled from the second pinion gear 65, the first rack bar 53 is moved in one of the right and left directions of the vehicle 1, i.e. one of the opposite directions along which the rack teeth of the first rack bars 53 are arranged, and the first synchronizing gears 55 rotate, thereby moving the second rack bar 54 in the other of the opposite directions by the same distance the first rack bar 53 is moved in the one of the opposite directions. Corresponding to the movement of the second rack bar 54, the second pinion gear 65 rotates.

Thus, by selectively coupling and uncoupling the first pinion gear 62 and the second pinion gear 65 by means of the coupling mechanism 63, it is possible to easily change between the state in which pair of rack bars 53 and 54 are moved in the same direction by the same distance, and the state in which the pair of rack bars 53 and 54 are moved in opposite directions to each other by the same amount.

As shown in Figs. 6(a) and 6(b), the moving part 63a is formed with a sensed portion 76 which is in the form of a protruding portion 76a protruding outwardly from the outer periphery of the moving part 63a such that when the coupling mechanism 63 is coupled and uncoupled, the protruding portion 76a moves together with the moving part 63a in the axial direction of the moving part 63a. The coupling mechanism 63 further includes an induction type proximity sensor 77a (77) located so as to face the moving part 63a when the coupling mechanism 63 is coupled, thereby sensing the coupled state of the coupling mechanism 63, and an induction type proximity sensor 77b (77) located so as to face the moving part 63a when the coupling mechanism 63 is uncoupled, thereby sensing the uncoupled state of the coupling mechanism 63. The protruding portion 76a and the induction type proximity sensors 77a and 77b constitute a coupling state sensing means 78. The induction type proximity sensors 77 sense the approach of the protruding portion 76a by sensing the magnetic loss corresponding to the approach of the protruding portion 76a.

In the coupled state (Fig. 6(a)), the induction type proximity sensor 77a for sensing the coupled state senses the approach of the protruding portion 76a, while the induction type proximity sensor 77b for sensing the uncoupled state does not sense the approach of the protruding portion 76a. In the uncoupled state (Fig. 6(b)), the induction type proximity sensor 77a for sensing the coupled state does not sense the approach of the protruding portion 76a, while the induction type proximity sensor 77b for sensing the uncoupled state senses the approach of the protruding portion 76a.

In this embodiment, the sensed portion 76 is the protruding portion 76a, and the sensors 77 are induction type proximity sensors 77a and 77b. Instead, a magnet may be used as the sensed portion 76, and magnetic sensing elements may be used as the sensors 77. Magnetic sensing elements maintain stable sensing capability and are less likely to malfunction in an environment where there exists a large amount of dust and dirt.

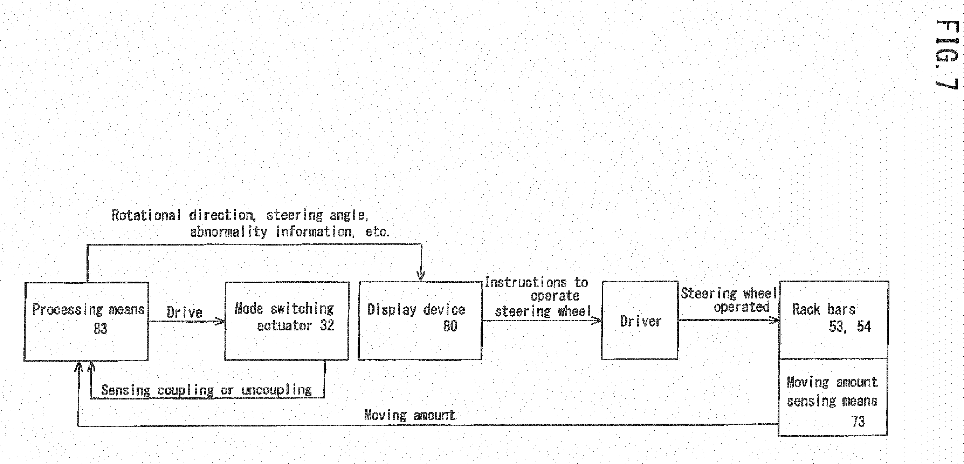

Fig. 7 schematically shows a control flow of this embodiment, which includes a processing means 83 configured to apply a command, to an actuator, not shown, to couple or uncouple the coupling mechanism 63. Then, the processing means 83 determines whether or not the coupling mechanism 63 has been actually coupled or uncoupled as commanded by the processing means 83, based on the feedback from the coupling state sensing means 78. If the signal from the coupling state sensing means 78 indicates any abnormality, the processing means 83 displays information on the abnormality on the display device 80. When the signal from the coupling state sensing means 78 indicates that the coupling mechanism 63 has been successfully uncoupled, the processing means 83 indicates, on the display device 80, information on the direction in which the steering wheel 2 is to be rotated by the driver, the steering angles of the wheels w to be achieved, etc. so that the driver can operate the steering wheel, thereby moving the rack bars 53 and 54 of the steering device, based on the information on the display device 80.

The processing means 83 calculates the moving amounts of the rack bars 53 and 54 based on the feedback from the moving amount sensing means 73, and consecutively renew the information displayed on the display device 80 based on the calculated moving amounts. Then, when the processing means 83 determines that a change of travel modes is complete, and the coupling mechanism 63 has been coupled, the processing means 83 displays, on the display device 80, information on the travel mode changed. The processing means 83 may be a portion of an electronic control unit (ECU) 40 (shown e.g., in Fig. 1(a)), or a separate element from the ECU 40.

Various travel modes of the vehicle 1, on which are mounted the steering devices 10 and 20, are now described.

### (Normal travel mode)

With the wheels positioned as shown in Figs. 1(a) and 1(b), in which the vehicle is movable in a straight line, the coupling mechanism 63 of the first steering device 10 for the front wheels is coupled (as shown in Fig. 6(a)) so that the first rack bar 53 and the second rack bar 54 of the first steering device 10 are movable together with each other in one of the right and left directions, in a rack case 50 of the steering device 10 which is fixed to the frame of the vehicle 1.

When the first rack bar 53 and the second rack bar 54 are moved together with each other by the same distance in one of the right and left directions relative to the direction in which the vehicle moves in a straight line, under the driving force from the normal steering actuator 31 or by the operation of the steering wheel 2, the front right and front left wheels w are steered by predetermined angles. Fig. 2 shows the state when the front wheels are steered to the right. Thus, when the two rack bars 53 and 54 are completely fixed to each other, the vehicle 1 can travel in the same manner as ordinary vehicles. During the normal travel mode, the operation of the steering wheel 2 by a driver is transmitted to the front wheels through the steering device 10 for the front wheels, so that the vehicle 1 can be moved in a straight line, or turned right or left by operating the steering wheel 2.

### (Pivot turn mode)

Fig. 3 shows a pivot turn mode. By uncoupling the coupling mechanism 63 (as shown in Fig. 6(b)) of each steering device 10 (20), the first rack bar 53 and the second rack bar 54 of the steering device 10 (20) become separately movable. Thus, when a driving force is applied to the first pinion gear 62 from a mode switching actuator 32, the first rack bar 53 and the second rack bar 54 are moved in opposite directions to each other by the same distance. That is, due to the first synchronizing gears 55 being disposed between the first rack bar 53 and the second rack bar 54, when the first rack bar 53 moves in one of the right and left directions, the second rack bar 54 moves in the other or the right and left directions.

When the first rack bar 53 and the second rack bar 54 of each steering device 10 (20) are moved in opposite directions to each other until all of the four wheels w are positioned such that, as shown in Fig. 3, their respective axes approximately pass through the center of the vehicle, the respective coupling mechanisms 63 are coupled (as shown in Fig. 6(a)). In this state, since all of the four wheels w are positioned such that their axes approximately pass through the center of the vehicle, by actuating the in-wheel motors M mounted in the respective wheels w, the vehicle can be turned with its center stationary (or substantially stationary).

### (Lateral movement mode)

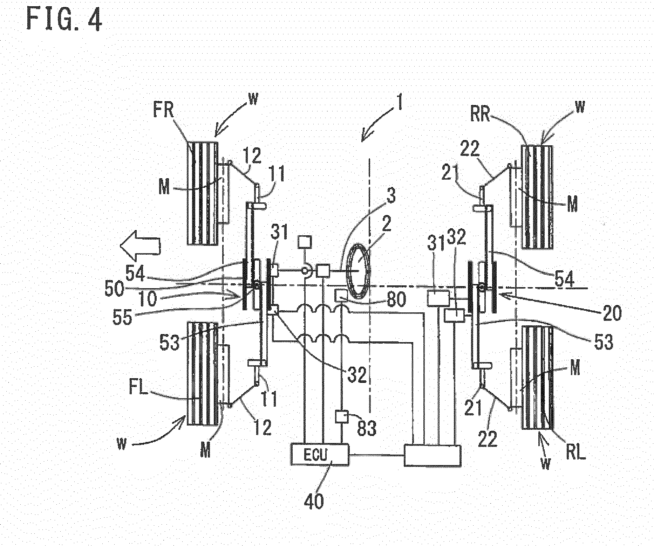

Fig. 4 shows a lateral movement mode, in which with the coupling mechanism 63 uncoupled (as shown in Fig. 6(b) as in the pivot turn mode, the mode switching actuator 32 of each steering device 10 (20) rotates the first pinion gear 62 to move the first rack bar 53 and the second rack bar 54 in each steering device 10 (20) in opposite directions to each other until all of the four wheels w are positioned such that their respective axes extend perpendicular to (i.e. in the right-and-left direction relative to) the direction in which the vehicle moves in a straight line, and in this state, the coupling mechanism 63 is coupled (as shown in Fig. 6(a)) to fix the pair of rack bars 53 and 54 in position.

At that time, it is possible to finely adjust the directions (angles) of the wheels w by moving the first rack bar 53 and the second rack bar 54 in one of the right and left directions relative to the direction in which the vehicle moves in a straight line, under the driving force of the normal steering actuator 31 or by operating the steering wheel 2.

Fig. 4 shows the positional relationship between the steering devices 10 and 20 for the front and rear wheels w, respectively, and the directions of the wheels w, during the lateral movement mode. Compared to during the pivot turn mode, the rack bars 53 and 54 protrude laterally outwardly to a larger degree. Thus, in this mode, the connecting points between the tie rods 12 and 22 and the respective wheels w are located at the outermost positions in the width direction of the vehicle. During the lateral movement mode too, it is possible to finely adjust the directions (angles) of the wheels w under the driving force of the normal steering actuator 31 or by operating the steering wheel 2.

Besides the above-mentioned travel modes, the steering arrangement shown is capable of performing various other travel modes.

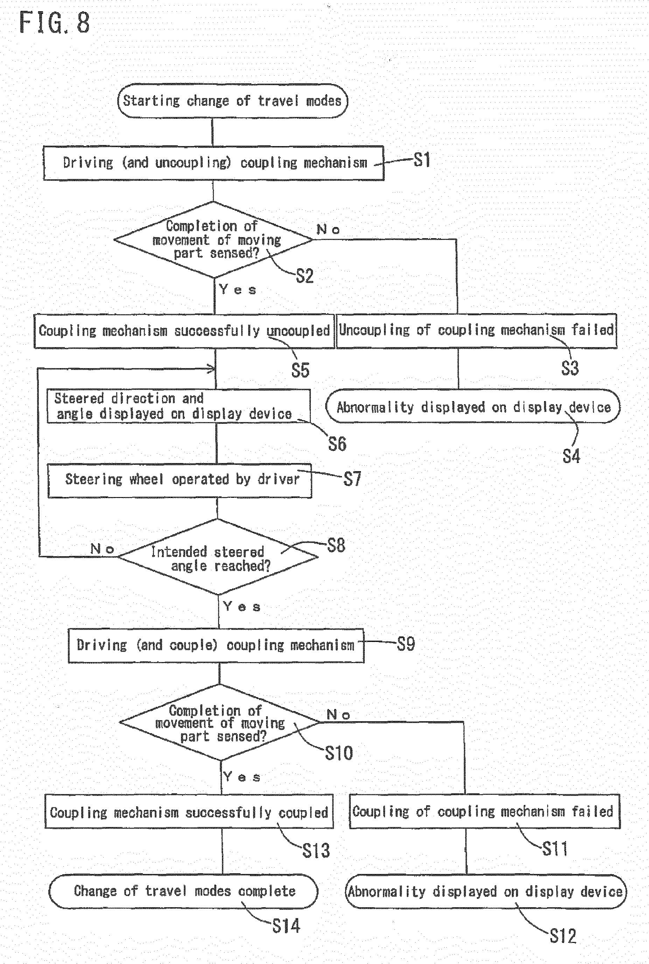

Fig. 8 shows how the processing means 83 (see Fig. 7) changes travel modes, and displays information (including information on abnormality) on the display device when changing travel modes.

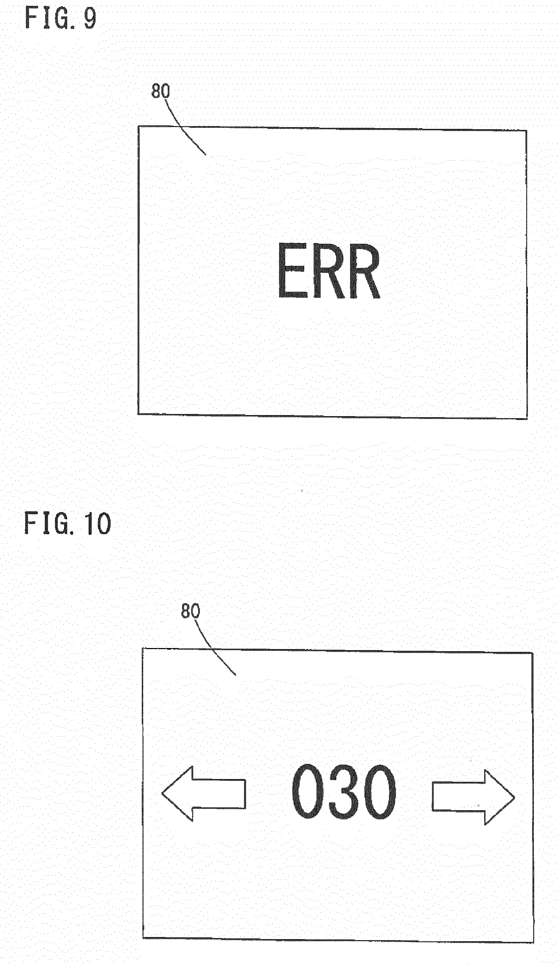

The processing means 83 (shown in Fig. 7) first issues a driving signal for uncoupling the coupling mechanism 63 (Step S1), and then determines, based on the feedback from the coupling state sensing means 78, whether or not the moving part 63a of the coupling mechanism 63 has moved, based on the driving signal, to a predetermined position (i.e., a position where the moving part 63a is located close to the induction type proximity sensor 77b for sensing the uncoupled position) (Step S2). If the coupling state sensing means 78 fails to sense the uncoupled state (Step S3), the processing means 83 determines that abnormality occurred in the coupling mechanism 63, and displays, as shown in Fig. 9, the abnormality on the display device 80 (Step S4) to notify the driver of the abnormality, while instantly terminating the change of travel modes to prevent damage to the coupling mechanism 63.

When the coupling state sensing means 78 senses that the coupling mechanism 63 has been uncoupled (Step S5), as shown in Fig. 10, the processing means 83 displays on the display device 80 the direction in which the steering wheel is to be turned by the driver, and the difference between the current angle of the right and left wheels w and the angle of the right and left wheels w after travel modes have been changed (Step S6). In this regard, although two arrows in the right and left directions are both shown in Fig. 10, only one of them is actually displayed at a time on the display device.

The driver operates the steering wheel 2 based on the information displayed on the display device 80 (Step S7). While the driver is operating the steering wheel 2, the information on the display device 80 is consecutively renewed. When the numerical value displayed on the display device is not zero (Step S8), which means that the angle of the wheels w has not reached the intended angle, the driver keeps operating the steering wheel until the value on the display device reaches zero.

When the steering wheel is turned by the driver until the wheels w are steered to the intended angle (Step S8), the processing means 83 issues a driving signal for coupling the coupling mechanism 63 (Step S9), and then determines, based on the feedback from the coupling state sensing means 78, whether or not the moving part 63a of the coupling mechanism 63 has moved, based on the driving signal, to a predetermined position (i.e., a position where the moving part 63a is located close to the induction type proximity sensor 77a for sensing the coupled position) (Step S10). If the coupling state sensing means 78 fails to sense the coupled state (Step S11), the processing means 83 determines that abnormality occurred in the coupling mechanism 63, and displays, as shown in Fig. 9, the abnormality on the display device 80 (Step S12) to notify the driver of the abnormality, while instantly terminating the change of travel modes to prevent damage to the coupling mechanism 63.

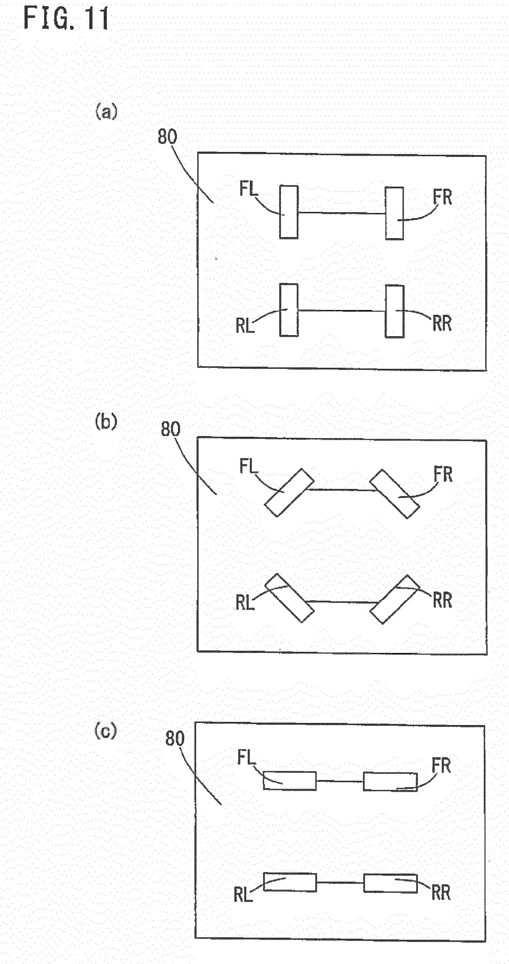

When the coupling state sensing means 78 senses that the coupling mechanism 63 has been coupled (Step S13), travel modes have been changed (Step S14). Thus, the processing means 83 schematically displays on the display device 80 the angles of the respective wheels 2 corresponding to the current travel mode as shown in Figs 11(a) to 11(c), which show the angles of the wheels corresponding, respectively, to normal travel mode, the pivot turn mode, and the lateral movement mode, so that the driver can confirm that travel modes have been changed successfully.

When changing travel modes, it is preferable to notify people around the vehicle of this fact by e.g., sounds, to encourage people around the vehicle to move away from the vehicle 1. This is desirable because when changing travel modes, the vehicle may behave in an unordinary manner (for example, the vehicle 1 may move slightly as a result of the right and left wheels w being steered in opposite directions to each other).

The contents on the display device 80 shown in the drawings are mere examples, and the characters and figures on the display device may be suitably changed in shape, size and layout, provided that the driver can easily and instantly recognize the travel mode to be changed to, and can reliably complete the change, based on what is displayed on the display device.

The vehicle 1 according to the present invention includes steering devices 10 and 20 for changing the travel state between the normal travel mode and the a special travel mode by steering the right and left wheels w in right and left opposite directions when the steering wheel is operated, and further includes a display device 80 and a processing means 83 configured to display, on the display device 80, information necessary for the driver to steer the wheels, based on the angle difference between the angle of the right and left wheels w during the normal travel mode or a special travel mode, and the current angle of the right and left wheels w, which have been steered by the steering devices 10 and 20. This arrangement allows the driver to steer the steering wheel by a right amount based on the information on the display device 80, thus reliably preventing the failure to change travel modes due to oversteering or understeering.

### DESCRIPTION OF THE NUMERALS

- 2.: Steering wheel
- 3.: Steering shaft
- 12, 22,: Tie rod
- 32.: Mode switching actuator
- 53, 54: Rack bar
- 55.: Synchronizing gear
- 60.: Rack bar moving means
- 62.: First pinion gear
- 63.: Coupling mechanism
- 63a.: Moving part
- 63b.: Fixed part
- 65.: Second pinion gear
- 73.: Moving amount sensing means
- 76.: Sensed portion
- 77.: Sensor portion
- 78.: Coupling state sensing means
- 80.: Display device
- 83.: Processing means
- w.: Wheel

## Claims

1. A vehicle capable of traveling in a normal travel mode and a special travel mode, and comprising:
steering devices (10 and 20) configured to change a travel state of the vehicle between the normal travel mode and the special travel mode by steering right and left wheels (w) in right and left opposite directions;
a display device (80); and
a processing means (83) configured to calculate an angle difference between an angle of each of the right and left wheels (w) in either one of the normal travel mode and the special travel mode, and a current angle of each of the right and left wheels (w), which have been steered by the steering devices (10 and 20),
the processing means (83) being further configured to display, on the display device (80), information necessary for a driver to steer the right and left wheels (w) based on the angle difference.

2. The vehicle of claim 1, further comprising a steering wheel (2), wherein the information includes a figure which is indicative of a direction in which the steering wheel (2) is to be turned by the driver.

3. The vehicle of claim 1 or 2, wherein the information includes the angle difference.

4. The vehicle of any of claims 1 to 3, wherein the processing means (83) is configured to display, on the display device (80), directions of the right and left wheels (w) in the form of figures when the travel state has been changed to an intended travel mode.

5. The vehicle of any of claims 1 to 4, wherein the processing means (83) is further configured, if abnormality occurs in one of the steering devices (10 and 20) while the travel state is being changed, to display the abnormality on the display device (80).

6. The vehicle of any of claims 1 to 5, wherein the processing means (83) is configured to generate warning sounds to a surrounding environment of the vehicle while the travel state is being changed.

7. The vehicle of any of claims 1 to 6, wherein the right and left wheels (w) comprises front right and front left wheels and rear right and rear left wheels, and
each of the steering devices (10 and 20) includes;
tie rods (12 and 22) connected to, and configured to steer, the front right and front left wheels, or the rear right and rear left wheels, respectively;
a pair of rack bars (53 and 54) connected to the respective tie rods (12 and 22);
a synchronizing gear (55) in mesh with the rack bars (53 and 54) and configured to convert a movement of one rack bar (53) of the pair of rack bars (53 and 54) in either one of right and left opposite directions along which rack teeth of the rack bars (53 and 54) are arranged to a movement of the other rack bar (54) of the pair of rack bars (53 and 54) in the other of the right and left opposite directions;
a rack bar moving means (60) capable of moving the pair of rack bars (53 and 54) in the respective right and left opposite directions; and
a moving amount sensing means (73) configured to sense moving amounts of the respective rack bars (53 and 54) in the right and/or left opposite direction.

8. The vehicle of claim 7, wherein the rack bar moving means (60) includes;
a first pinion gear (62) mounted, directly or indirectly through another member, to a steering shaft (3), and in mesh with the one rack bar (53);
a second pinion gear (65) coaxial with the first pinion gear (62), and in mesh with the other rack bar (54);
a coupling mechanism (63) disposed between the first pinion gear (62) and the second pinion gear (65), and configured to selectively couple together the first pinion gear (62) and the second pinion gear (65) and uncouple the first pinion gear (62) and the second pinion gear (65) from each other; and
a coupling state sensing means (78);
wherein the coupling mechanism (63) includes:
a fixed part (63b) provided on one of the first pinion gear (62) and the second pinion gear (65); and
a moving part (63a) provided on the other of the first pinion gear (62) and the second pinion gear (65), and configured to be fitted to the fixed part (63b) by axially moving, relative to the fixed part (63b), while being kept coaxial with the fixed part (63b), and
wherein the coupling state sensing means (78) includes:
a sensed portion (76) provided on an outer periphery of the moving part (63a); and
a sensor portion (77) arranged such that when the fixed part (63b) and the moving part (63a) are coupled together and uncoupled from each other, the sensor portion (77) is opposed to the detected portion (76), and configured to generate a sensor signal when the sensor portion (77) is close to the sensed portion (76).
